# EUROPEAN PATENT SPECIFICATION

(11) **EP 4 027 427 B1**
(45) Date of publication and mention of the grant of the patent: **07.05.2025**
(21) Application number: 21210521.7
(22) Date of filing: 25.11.2021
(51) Int. Cl.: H01M 10/0562, H01M 4/134, H01M 4/36, H01M 4/66, H01M 4/1395, H01M 10/0525

(54) **ALL SOLID STATE BATTERY**
FESTKÖRPERBATTERIE
BATTERIE TOUT SOLIDE

(30) Priority: 03.12.2020 JP 2020201134
(43) Date of publication of application: 13.07.2022
(73) Proprietor: TOYOTA JIDOSHA KABUSHIKI KAISHA, Toyota-shi, Aichi-ken, 471-8571 (JP)
(72) Inventor: YAMANO, Yuhi, Chuo-ku, 103-0022 (JP)
(74) Representative: D Young & Co LLP

(56) References cited:
- US-A1- 2007 092 797
- US-A1- 2012 107 684
- US-A1- 2016 197 351
- US-A1- 2019 267 631

## Description

### Technical Field

The present disclosure relates to an all solid state battery.

### Background Art

An all solid state battery is a battery including a solid electrolyte layer between a cathode active material layer and an anode active material layer, and has advantages in that it is easy to simplify a safety device as compared with a liquid battery including a liquid electrolyte containing flammable organic solvents.

As an anode active material having good capacity property, a Si based active material has been known. Patent Literature 1 discloses an anode for a sulfide all solid state battery including at least one kind of the material selected from a group consisting of Si and a Si alloy, as an anode active material.

Also, although it is not a technique relating to an all solid state battery, Patent Literature 2 discloses an anode for a non-aqueous electrolyte secondary battery comprising a current collector, a first layer including a lithium titanate, and a second layer including a carbon material, wherein a ratio T₁/T₂ of a thickness T₁ of the first layer and a thickness T₂ of the second layer is 0.15 or more and 0.55 or less. Similarly, Patent Literature 3 discloses a non-aqueous electrolyte secondary battery comprising a sheet current collector, an anode mixture layer, and an anode including a LTO layer.

Also, Patent Literature 4 discloses an all solid state battery wherein, in the cathode active material layer, the concentration of the cathode active material closer to the cathode current collector is higher than the concentration of the cathode active material closer to the solid electrolyte layer; and in the anode active material layer, the concentration of the anode active material closer to the anode current collector is higher than the concentration of the anode active material closer to the solid electrolyte layer.

US 2007/0092797 A1 provides a battery using an anode, and methods of manufacturing the anode and the battery.

### Citation List

### Patent Literatures

Patent Literature 1: Japanese Patent Application Laid-Open (JP-A) No. 2018-142431
Patent Literature 2: JP-A No. 2014-199714
Patent Literature 3: JP-A No. 2013-214460
Patent Literature 4: JP-A No. 2015-225855

### Summary of Disclosure

### Technical Problem

The volume variation due to charge/discharge of an active material having a good capacity property, such as a Si based active material, tends to be large. Also, such active material has a good capacity property, on the other hand, the heating value tends to be high, when a short circuit occurs, for example. Also, when focusing only on the reduction of the heating value, the internal resistance is likely to be increased so that a desired battery performance may not be maintained.

The present disclosure has been made in view of the above circumstances, and a main object of the present disclosure is to provide an all solid state battery capable of decreasing the heating value while suppressing the internal resistance increase.

### Solution to Problem

In order to achieve the object, the present disclosure provides an all solid state battery comprising an anode active material layer, and an anode current collector, and the anode active material layer includes an anode active material whose total volume expansion rate, due to charge, is 14% or more, the anode current collector includes a coating layer including an oxide active material, on a surface of the anode active material layer side, and a ratio of a thickness of the coating layer to a thickness of the anode active material layer is 3% or more and 13% or less.

According to the present disclosure, by placing the coating layer between the anode current collector and the anode active material layer, and by setting the thickness of the coating layer to the thickness of the anode active material layer in a predetermined range, an all solid state battery capable of decreasing the heating value while suppressing the internal resistance increase, may be provided.

In the disclosure, the ratio of a thickness of the coating layer to a thickness of the anode active material layer may be 5% or more and 13% or less.

In the disclosure, the oxide active material is a lithium titanate.

In the disclosure, the alternative oxide active material is a niobium titanium based oxide.

In the disclosure, the anode active material may be a Si based active material.

In the disclosure, a thickness of the coating layer may be 10 µm or less.

In the disclosure, the coating layer may include no solid electrolyte.

In the disclosure, the coating layer may include a solid electrolyte.

In the disclosure, a ratio of the solid electrolyte in the coating layer may be 5 volume% or more and 30 volume% or less.

In the disclosure, a ratio of a surface roughness (Rz) of a surface of the anode current collector, on the coating layer side, to a thickness of the coating layer may be 30% or more and 80% or less.

### Advantageous Effects of Disclosure

The all solid state battery in the present disclosure exhibits effects that the heating value may be decreased while suppressing the internal resistance increase.

### Brief Description of Drawings

FIG. 1 is a schematic cross-sectional view illustrating an example of an all solid state battery in the present disclosure.
FIG. 2 is a schematic cross-sectional view illustrating an example of an anode in the present disclosure.
FIG. 3 is the result of a nailing test for the evaluation cells obtained in Examples 1 to 5 and Comparative Examples 1 to 3.
FIG. 4 is the result of an internal resistance evaluation for the evaluation cells obtained in Examples 1 to 5 and Comparative Examples 1 to 3.
FIG. 5 is the result of a charge/discharge cycle test for the evaluation cells obtained in Example 3 and Comparative Example 1.
FIG. 6 is the result of a nailing test for the evaluation cells obtained in Examples 3, 6 to 9.
FIG. 7 is the result of an internal resistance evaluation for the evaluation cells obtained in Examples 9 to 10 and Comparative Examples 1 and 4.
FIG. 8 is the result of a nailing test for the evaluation cells obtained in Examples 5, 11 to 13.

### Description of Embodiments

An all solid state battery in the present disclosure will be hereinafter described in detail referring to the drawings. Each figure shown below is schematically expressed, and the size and the shape of each member are appropriately exaggerated, to facilitate understanding. Also, in each figure, the hatching indicating the cross-section of a member is appropriately omitted. Also, in the present specification, in expressing an embodiment of arranging a member on another member, when merely expressed as "on" or "under", it includes both the case of arranging a member directly on or directly under another member so as to be in contact with another member, and the case of arranging a member above or below another member via still another member, unless otherwise specified.

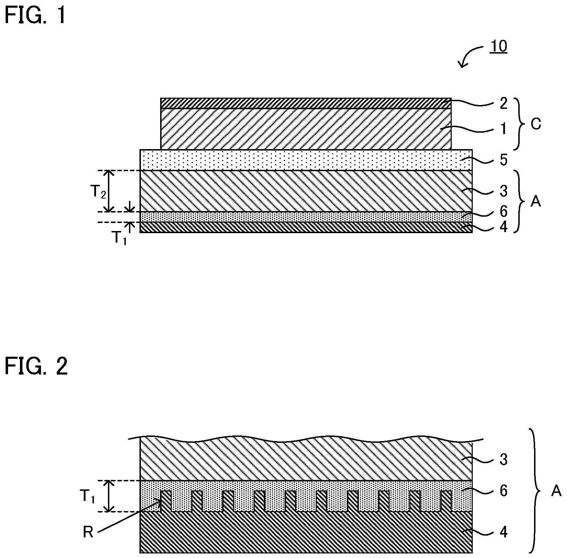

FIG. 1 is a schematic cross-sectional view illustrating an example of an all solid state battery in the present disclosure. All solid state battery 10 shown in FIG. 1 comprises cathode C including cathode active material layer 1, and cathode current collector 2; anode A including anode active material layer 3, and anode current collector 4; and solid electrolyte layer 5 placed between cathode active material layer 1 and anode active material layer 3. Anode active material layer 3 includes an anode active material with large total volume expansion rate, due to charge. Also, anode current collector 4 includes coating layer 6 including an oxide active material, on a surface of anode active material layer 3 side. In the present disclosure, the ratio of thickness T₁ of coating layer 6 to thickness T₂ of anode active material layer 3 is in a predetermined range.

According to the present disclosure, by placing the coating layer between the anode current collector and the anode active material layer, and by setting the thickness of the coating layer to the thickness of the anode active material layer in a predetermined range, an all solid state battery capable of decreasing the heating value while suppressing the internal resistance increase, may be provided. As described above, the volume variation due to charge/discharge of an active material having a good capacity property, such as a Si based active material, tends to be large. Also, such active material has a good capacity property, on the other hand, the heating value tends to be high when a short circuit occurs, for example. In the present disclosure, a coating layer including an oxide active material is placed between the anode current collector and the anode active material layer. When Li is intercalated, the oxide active material exhibits an electron conductivity, and when the intercalated Li is desorbed, it exhibits an insulating property. Therefore, the internal resistance increase may be suppressed by forming an electron conductive path, using the electron conductivity of the oxide active material. Meanwhile, for example, when a short circuit occurs, since Li is desorbed from the oxide active material, the heating value may be decreased by blocking the electron conductive path, using the insulating property (shutdown function) thereof.

### 1. Anode

The anode in the present disclosure includes an anode active material layer, and an anode current collector. Also, the anode current collector includes a coating layer including an oxide active material, on a surface of the anode active material layer side.

### (1) Anode active material layer

An anode active material layer includes at least an anode active material, and may further include at least one of a solid electrolyte, a conductive material, and a binder.

The anode active material layer includes an anode active material whose total volume expansion rate, due to charge, is 14% or more. Here the total volume expansion rate, due to charge, of a graphite, known as a general anode active material, is 13.2% (Simon Schweidler et al., "Volume Changes of Graphite Anodes Revisited: A Combined Operando X-ray Diffraction and In Situ Pressure Analysis Study", J. Phys. Chem. C 2018, 122, 16, 8829-8835). That is, the anode active material in the present disclosure is an active material whose total volume expansion rate, due to charge, is larger than the graphite. As Simon Schweidler et al. describes, the total volume expansion rate due to charge may be determined by a space-group-independent evaluation. The total volume expansion rate due to charge of the anode active material may be 100% or more, and may be 200% or more.

An example of the anode active material may be a Si based active material. The Si based active material is an active material including a Si element. Examples of the Si based active material may include a Si simple substance, a Si alloy, and a Si oxide. The Si alloy preferably includes a Si element as a main component. Also, other examples of the anode active material may include a Sn based active material. The Sn based active material is an active material including a Sn element. Examples of the Sn based active material may include a Sn simple substance, a Sn alloy, and a Sn oxide. The Sn alloy preferably includes a Sn element as a main component.

Examples of the shape of the anode active material may include a granular shape. The average particle size (D₅₀) of the anode active material is not particularly limited; and is for example, 10 nm or more, and may be 100 nm or more. Meanwhile, the average particle size (D₅₀) of the anode active material is, for example, 50 µm or less, and may be 20 µm or less. The average particle size (D₅₀) may be calculated from the measurement by, for example, a laser diffraction particle size analyzer, and a scanning electron microscope (SEM).

The proportion of the anode active material in the anode active material layer is, for example, 20 weight% or more, may be 40 weight% or more, and may be 60 weight% or more. Meanwhile, the proportion of the anode active material is, for example, 80 weight% or less.

The anode active material layer may include a solid electrolyte. Examples of the solid electrolyte may include inorganic solid electrolytes such as sulfide solid electrolyte, oxide solid electrolyte, nitride solid electrolyte, and halide solid electrolyte.

Examples of the sulfide solid electrolyte may include a solid electrolyte containing a Li element, an X element (X is at least one kind of P, As, Sb, Si, Ge, Sn, B, Al, Ga, and In), and a S element. Also, the sulfide solid electrolyte may further include at least one of an O element and a halogen element. Examples of the halogen element may include a F element, a Cl element, a Br element, and an I element. The sulfide solid electrolyte may be a glass (amorphous), and may be a glass ceramic. Examples of the sulfide solid electrolyte may include Li₂S-P₂S₅, LiI-Li₂S-P₂S₅, LiI-LiBr-Li₂S-P₂S₅, Li₂S-SiS₂, Li₂S-GeS₂, and Li₂S-P₂S₅-GeS₂.

The anode active material layer may include a conductive material. Examples of the conductive material may include a carbon material, a metal particle, and a conductive polymer. Examples of the carbon material may include particulate carbon materials such as acetylene black (AB) and Ketjen black (KB); and fibrous carbon materials such as carbon fiber, carbon nanotube (CNT), and carbon nanofiber (CNF).

The anode active material layer may include may include a binder. Examples of the binder may include fluorine-based binders, polyimide-based binders, and rubber-based binders.

### (2) Anode current collector

The anode current collector is a layer that corrects current of the anode active material layer. Examples of the anode current collector may include a metal current collector. Examples of the metal current collector may include a current collector including a metal such as Cu, and Ni. The metal current collector may be a simple substance of the metal, and may be an alloy of the metal. Examples of the shape of the anode current collector may include a foil shape.

### (3) Coating layer

The coating layer is a layer placed on a surface of the anode current collector on the side of the anode active material layer. Further, the coating layer includes an oxide active material. The oxide active material usually exhibits an electron conductivity under the condition wherein Li is intercalated, and has an insulating property under the condition wherein the intercalated Li is desorbed. The electron conductivity (25°C) of the oxide active material, under the condition wherein Li is intercalated, is, for example, 8.0 × 10⁻¹ S/cm or more. Meanwhile, electron conductivity (25°C) of the oxide active material, under the condition wherein the intercalated Li is desorbed, is, for example, 2.1 × 10⁻⁶ S/cm or less.

The oxide active material includes at least a metal element and an oxygen element. Also, the oxide active material includes at least one of a layered structure and a spinel structure. The oxide active material is a lithium titanate. The lithium titanate is a compound including Li, Ti, and O, and examples thereof may include Li₄Ti₅Oₗ₂, Li₄TiO₄, Li₂TiO₃, and Li₂Ti₃O₇. The alternative example of the oxide active material is a niobium titanium based oxide. The niobium titanium based oxide is a compound including Ti, Nb, and O, and examples thereof may include TiNb₂O₇, and Ti₂Nb₁₀O₂₉. The coating layer may include only one kind of the oxide active material, and may include two kinds or more thereof. Also the Li intercalation/desorption potential of the oxide active material is preferably higher than that of the anode active material.

Examples of the shape of the oxide active material may include a granular shape. The average particle size (D₅₀) of the oxide active material is not particularly limited; and is, for example, 10 nm or more, and may be 100 nm or more. Meanwhile, the average particle size (D₅₀) of the oxide active material is, for example, 50 µm or less, and may be 20 µm or less. The proportion of the oxide active material in the coating layer is, for example, 50 weight% or more, may be 70 weight% or more, and may be 90 weight% or more.

In the present disclosure, the thickness of the coating layer is regarded as T₁, and the thickness of the anode active material layer is regarded as T₂. Incidentally, the unit of T₁ and T₂ is µm. The ratio (T₁/T₂) of T₁ to T₂ is usually 3% or more, and may be 5% or more. When T₁/T₂ is too low, the heating value decreasing effect is not likely to be obtained. Meanwhile, the ratio (T₁/T₂) of T₁ to T₂ is usually 13% or less, and may be 10% or less. When T₁/T₂ is too high, the internal resistance is likely to be increased.

T₁ is, for example, 2 µm or more, may be 3 µm or more, and may be 4 µm or more. Meanwhile, T₁ is, for example, 15 µm or less, and may be 10 µm or less. T₂ is, for example, 20 µm or more, and may be 40 µm or more. Meanwhile, T₂ is, for example, 200 µm or less, and may be 150 µm or less.

The coating layer may include a solid electrolyte. In this case, the shutdown function is promptly exhibited by preferable ion conductive path being formed in the coating layer so that the heating value may further be decreased. The proportion of the solid electrolyte in the coating layer is, for example, 5 volume% or more, and may be 10 volume% or more. When the proportion of the solid electrolyte is too low, the heating value decreasing effect due to the solid electrolyte is not likely to be obtained. Meanwhile, the proportion of the solid electrolyte in the coating layer is, for example, 30 volume% or less. When the proportion of the solid electrolyte is too high, the internal resistance is likely to be increased. Also, the coating layer may include no solid electrolyte. In this case, there is an advantage that the internal resistance increase is easily suppressed.

The coating layer preferably includes a binder. By adding a binder, adhesiveness of the coating layer is improved, and adhesion of the anode active material layer and the anode current collector is improved. In relation to the binder, a binder similar to the binder in the anode active material layer described above may be used. The content of the binder in the coating layer is, for example, 1 weight% or more and 10 weight% or less.

Also, as shown in FIG. 2, the thickness of coating layer 6 is regarded as T₁, and the surface roughness (Rz) of the surface of anode current collector 4, on coating layer 6 side is regarded as R. Incidentally, the unit of T₁ and R is µm. Also, the surface roughness Rz means a ten-point average roughness, and may be determined by, for example, a probe type surface roughness measuring device. The ratio (R/T₁) of R to T₁ is, for example, 30% or more, and may be 40% or more. As R/T₁ increases, the heating value decreasing effect is likely to be obtained. Meanwhile, the ratio (R/T₁) of R to T₁ is, for example, less than 100%, may be 90% or less, and may be 80% or less. When R/T₁ is less than 100%, the heating value may further be decreased, since a part of the anode current collector may be suppressed from being exposed from the coating layer.

The surface roughness (Rz) of the anode current collector may be 0 µm, and may be 0 µm or more. In the latter case, the surface roughness (Rz) of the anode current collector is, for example, 2 µm or more, may be 4 µm or more, and may be 6 µm or more. Meanwhile, the surface roughness (Rz) of the anode current collector is, for example, 9 µm or less.

### 2. Cathode

The cathode in the present disclosure includes a cathode active material layer, and a cathode current collector. The cathode active material layer is a layer including at least a cathode active material. Also, the cathode active material layer may include at least one of a conductive material, a solid electrolyte, and a binder, as necessary.

Examples of the cathode active material may include an oxide active material. Examples of the oxide active material may include rock salt bed type active materials such as LiCoO₂, LiMnO₂, LiNiO₂, LiVO₂, LiNi_{1/3}CO_{1/3}Mn_{1/3}O₂; spinel type active materials such as LiMn₂O₄, Li₄Ti₅O₁₂, and Li(Ni_{0.3}Mn_{1.5})O₄; and olivine type active materials such as LiFePO₄, LiMnPO₄, LiNiPO₄, and LiCoPO₄.

A protecting layer including a Li ion conductive oxide may be formed on the surface of the oxide active material. The reason therefor is to suppress the reaction between the oxide active material and the solid electrolyte. Examples of the Li ion conductive oxide may include LiNbO₃. The thickness of the protecting layer is, for example, 1 nm or more and 30 nm or less. Also, Li₂S may be used, for example, as the cathode active material.

Examples of the shape of the cathode active material may include a granular shape. The average particle size (D₅₀) of the cathode active material is not particularly limited; and is, for example, 10 nm or more, and may be 100 nm or more. Meanwhile, the average particle size (D₅₀) of the cathode active material is, for example, 50 µm or less, and may be 20 µm or less.

The conductive material, the solid electrolyte, and the binder used for the cathode active material layer may be in the same contents as those described in "1. Anode" above; thus, the description herein is omitted. The thickness of the cathode active material layer is, for example, 0.1 µm or more and 1000 µm or less. Also, examples of the materials for the cathode current collector may include SUS, aluminum, nickel, iron, titanium, and carbon.

### 3. Solid electrolyte layer

The solid electrolyte layer in the present disclosure is a layer placed between the cathode active material layer and the anode active material layer, and is a layer including at least a solid electrolyte. The solid electrolyte layer preferably includes a sulfide solid electrolyte as the solid electrolyte. Also, the solid electrolyte layer may include a binder. The solid electrolyte, and the binder used for the solid electrolyte layer may be in the same contents as those described in "1. Anode" above; thus, the description herein is omitted. The thickness of the solid electrolyte layer is, for example, 0.1 µm or more and 1000 µm or less.

### 4. All solid state battery

The all solid state battery in the present disclosure includes at least one power generation unit including a cathode active material layer, a solid electrolyte layer, and an anode active material layer, and may include two or more of them. When the all solid state battery includes a plurality of the power generation units, they may be connected in parallel, and may be connected in series. The all solid state battery in the present disclosure is provided with an exterior body that houses a cathode, a solid electrolyte layer, and an anode. The kind of the exterior body is not particularly limited; and examples thereof may include a laminate exterior body.

The all solid state battery in the present disclosure may include a confining jig that applies a confining pressure along the thickness direction, to the cathode, the solid electrolyte layer and the anode. By applying the confining pressure, a favorable ion conductive path and an electron conductive path may be formed. The confining pressure is, for example, 0.1 MPa or more, may be 1 MPa or more, and may be 5 MPa or more. Meanwhile, the confining pressure is, for example, 100 MPa or less, may be 50 MPa or less, and may be 20 MPa or less.

The all solid state battery in the present disclosure is typically an all solid state lithium ion secondary battery. The use of all solid state battery is not particularly limited, and examples thereof may include a power supply of a vehicle such as a hybrid electric vehicle, a battery electric vehicle, a gasoline-powered vehicle, and a diesel-powered vehicle. In particular, it is preferably used in the driving power supply of a hybrid electric vehicle, or a battery electric vehicle. Also, the all solid state battery in the present disclosure may be used as a power source for moving objects other than vehicles, such as railroad vehicles, ships, and airplanes, or may be used as a power source for electric appliances such as information processing apparatuses.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

### [Comparative Example 1]

### <Production of anode>

An anode active material (Si particles, average particle size of 2.5 µm), a sulfide solid electrolyte (10LiI-15LiBr-75(0.75Li₂S-0.25P₂S₅)), average particle size of 0.5 µm), a conductive material (VGCF), and a binder (SBR) were prepared. These were weighed so as the weight ratio was anode active material : sulfide solid electrolyte : conductive material : binder = 52.7 : 40.9 : 4.2 : 2.1, and were added to a dispersing medium (di-isobutyl ketone). An anode slurry was obtained by dispersing the obtained mixture by an ultrasonic homogenizer (UH-50, manufactured by SMT Co., Ltd.). An anode current collector (a Ni foil) was coated with the obtained anode slurry, and was dried under conditions of 100°C for 30 minutes. Then, an anode including an anode active material layer and an anode current collector was obtained by punching to a size of 1 cm². The thickness of the anode active material layer was 80 µm.

### <Production of cathode>

A cathode active material (LiNi_{1/3}CO_{1/3}Mn_{1/3}O₂ coated with LiNbO₃), a sulfide solid electrolyte (10LiI-15LiBr-75(0.75Li₂S-0.25P₂S₅)), a conductive material (VGCF), and a binder (PVDF) were prepared. These were weighed so as the weight ratio was cathode active material : sulfide solid electrolyte : conductive material : binder = 84.7 : 13.4 : 1.3 : 0.6, and were added to a dispersing medium (heptane). A cathode slurry was obtained by dispersing the obtained mixture by an ultrasonic homogenizer (UH-50, manufactured by SMT Co., Ltd.). A cathode current collector (an Al foil) was coated with the obtained cathode slurry, and was dried under conditions of 100°C for 30 minutes. Then, a cathode including a cathode active material layer and a cathode current collector was obtained by punching to a size of 1 cm². The thickness of the cathode active material layer was 80 µm.

### <Production of solid electrolyte layer>

A solid electrolyte layer (thickness of 15 µm) was obtained by charging a sulfide solid electrolyte (10LiI-15LiBr-75(0.75Li₂S-0.25P₂S₅)) into a ceramic tube with an inner cross-sectional area of 1 cm², and pressing under 4 ton/cm².

### <Production of evaluation cell>

The cathode was placed on one surface of the solid electrolyte layer, and was pressed under 1 ton/cm² (approximately 98 MPa). Then, the anode was placed on another surface of the solid electrolyte layer, and was pressed under 4 ton/cm² (approximately 392 MPa). Thereby, an evaluation cell was obtained.

### [Comparative Example 2]

LTO particles (Li₄Ti₅O₁₂, average particle size of 0.7 µm), and a binder (SBR) were prepared. These were weighed so as the weight ratio was LTO particles : binder = 95 : 5, and were added to a dispersing medium (di-isobutyl ketone). A slurry for a coating layer was obtained by dispersing the obtained mixture by an ultrasonic homogenizer (UH-50, manufactured by SMT Co., Ltd.). An anode current collector (a Ni foil) was coated with the obtained slurry for a coating layer, and was dried under conditions of 100°C for 30 minutes. Thereby, an anode current collector including a coating layer (thickness of 20 µm) was obtained. The ratio T₁/T₂ of thickness T₁ of the coating layer (20 µm) to thickness T₂ of the anode active material layer (80 µm) was 25%. An evaluation cell was obtained in the same manner as in Comparative Example 1 except that the obtained anode current collector (an anode current collector including a coating layer) was used and the cathode capacity was adjusted. Since Li is intercalated also into LTO in the coating layer during the initial charge, the cathode capacity was adjusted to be larger considering it.

### [Examples 1 to 5, Comparative Example 3]

An evaluation cell was obtained in the same manner as in Comparative Example 2 except that the value of T₁/T₂ was changed to the value described in Table 1.

### [Evaluation]

### <Nailing test>

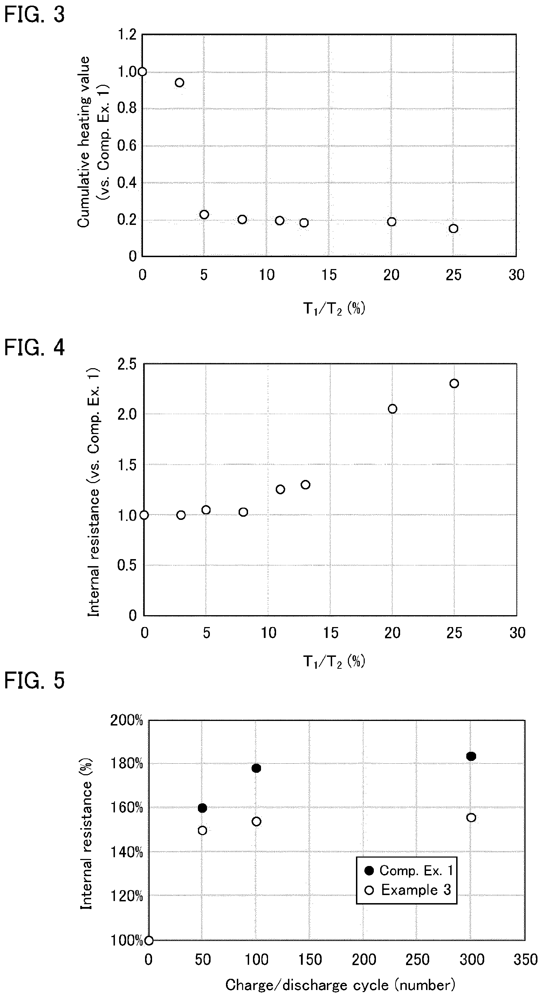

The evaluation cells obtained in Examples 1 to 5 and Comparative Examples 1 to 3 were charge, and a nailing test was carried out. The charging conditions were: a constant current charge (current value of 1/3 C, charge termination voltage of 4.35 V), and a constant voltage charge (voltage value of 4.35 V, current value of 40 A). Also, during the constant voltage charge, an iron nail with a diameter of 1.0 mm was inserted from the side surface of the evaluation cell, to a depth of 0.8 mm at rate of 0.1 mm/sec, so as to generate a short circuit. The voltage drop of the evaluation cell and the sneak current form the power source were measured, and the heating value was calculated therefrom. Also, the cumulative heating value was calculated by multiplying the heating value and the sneaking time (five seconds). Incidentally, the sneaking time is a time depending on the short circuit current in a precise sense. However, since the sneaking is usually completed within five seconds, the time was fixed to five seconds. The results are shown in FIG. 3 and Table 1. Incidentally, the cumulative heating value is a relative value when the result in Comparative Example 1 is regarded as 1.00.

As shown in FIG. 3 and Table 1, compared to Comparative Example 1, it was confirmed that the cumulative heating values in Examples 1 to 5 and Comparative Examples 2 to 3 were decreased. Particularly, compared to Example 1, the cumulative heating values in Examples 2 to 5 and Comparative Examples 2 to 3 were remarkably decreased. The reason therefor is presumed that the shutdown function of the LTO included in the coating layer was effectively exhibited.

### <Charge/discharge test and internal resistance evaluation>

A charge/discharge test was carried out for the evaluation cells obtained in Examples 1 to 5 and Comparative Examples 1 to 3. Specifically, the evaluation cell was confined at constant size under the confining pressure of 5 MPa, constant current-constant voltage (CC-CV) charged at 0.461 mA, until 4.35 V. Then, the evaluation cell was CC-CV discharged at 0.461 mA, until 3.0 V.

The evaluation cell was charged again so as to adjust the OCV of the evaluation cell was 3.7 V. Then, the voltage when discharged for 10 seconds at 17.2 mA was measured. The internal resistance was determined from the voltage variation from the OCV. The results are shown in FIG. 4 and Table 1. Incidentally, the internal resistance is a relative value when the result in Comparative Example 1 is regarded as 1.00.

As shown in FIG. 4 and Table 1, it was confirmed that the internal resistances in Examples 1 to 5 were equivalent to Comparative Example 1. Meanwhile, compared to Comparative Example 1, the internal resistances in Comparative Examples 2 to 3 were increased.

**[Table 1]**

| | T₁ [*µ*m] | T₁/T₂ [%] | Cumulative heating value | Internal resistance |
|---|---|---|---|---|
| Comp. Ex. 1 | 0 | 0 | 1.00 | 1.00 |
| Example 1 | 2 | 3 | 0.94 | 1.00 |
| Example 2 | 4 | 5 | 0.23 | 1.05 |
| Example 3 | 6 | 8 | 0.20 | 1.03 |
| Example 4 | 8 | 11 | 0.20 | 1. 25 |
| Example 5 | 10 | 13 | 0.18 | 1.30 |
| Comp. Ex. 3 | 16 | 20 | 0.19 | 2.05 |
| Comp. Ex. 2 | 20 | 25 | 0.15 | 2.30 |

### <Charge/discharge cycle test>

A charge/discharge cycle test was carried out for the evaluation cells obtained in Example 3 and Comparative Example 1. Specifically, the evaluation cell was confined at constant size under the confining pressure of 5 MPa, at 60°C, a constant current charge (current value of 2 C, charge termination voltage of 4.22 V) was carried out, and a constant current discharge (current value of 2 C, discharge termination voltage of 3.14 V) was carried out. The charge/discharge was repeated under the conditions described above, the internal resistances at 50^{th} cycle, 100^{th} cycle, and 300^{th} cycle were measured. The method for measuring the internal resistance was the same as described above. The results are shown in FIG. 5 and Table 2. Incidentally, the internal resistance at each cycle is a relative value when the internal resistance (the internal resistance at 0^{th} cycle) in the internal resistance evaluation described above is regarded as 100%.

**[Table 2]**

| | T₁/T₂ [%] | Internal resistance increase (%) | | | |
|---|---|---|---|---|---|
| | | 0^{th} cycle | 50^{th} cycles | 100^{th} cycles | 300^{th} cycles |
| Comp. Ex. 1 | 0 | 100 | 160 | 178 | 183 |
| Example 3 | 8 | 100 | 150 | 154 | 156 |

As shown in FIG. 5 and Table 2, compared to Comparative Example 1, it was confirmed that the internal resistances increase due to charge/discharge in Example 3 was small. The reason therefor is presumed that, in Comparative Example 1, a lot of gaps were generated at the interface of the anode active material layer and the anode current collector, in connection with the expansion and contraction of Si; meanwhile, few gaps were generated at the interface of the coating layer and the anode current collector in Example 3.

### [Example 6]

LTO particles (Li₄Ti₅O₁₂, average particle size of 0.7 µm), a sulfide solid electrolyte (10LiI-15LiBr-75(0.75Li₂S-0.25P₂S₅), average particle size of 0.5 µm), and a binder (SBR) were prepared. LTO particles and the binder were weighed so as the weight ratio was LTO particles : binder = 95 : 5, and were added to a dispersing medium (di-isobutyl ketone). Further, the sulfide solid electrolyte was weighed so as the proportion in the coating layer was 5 volume%, and was added to the dispersing medium. A slurry for a coating layer was obtained by dispersing the obtained mixture by an ultrasonic homogenizer (UH-50, manufactured by SMT Co., Ltd.). An anode current collector (a Ni foil) was coated with the obtained slurry for a coating layer, and was dried under conditions of 100°C for 30 minutes. Thereby, an anode current collector including a coating layer (thickness of 6 µm) was obtained. The ratio T₁/T₂ of thickness T₁ of the coating layer (6 µm) to thickness T₂ of the anode active material layer (80 µm) was 8%. An evaluation cell was obtained in the same manner as in Comparative Example 1 except that the obtained anode current collector (an anode current collector including a coating layer) was used and the cathode capacity was adjusted. Since Li is intercalated also into LTO in the coating layer during the initial charge, the cathode capacity was adjusted to be larger considering it.

### [Examples 7 to 9]

An evaluation cell was obtained in the same manner as in Example 6 except that the proportion of the sulfide solid electrolyte in the coating layer (SE content) was changed to the value described in Table 3.

### <Nailing test>

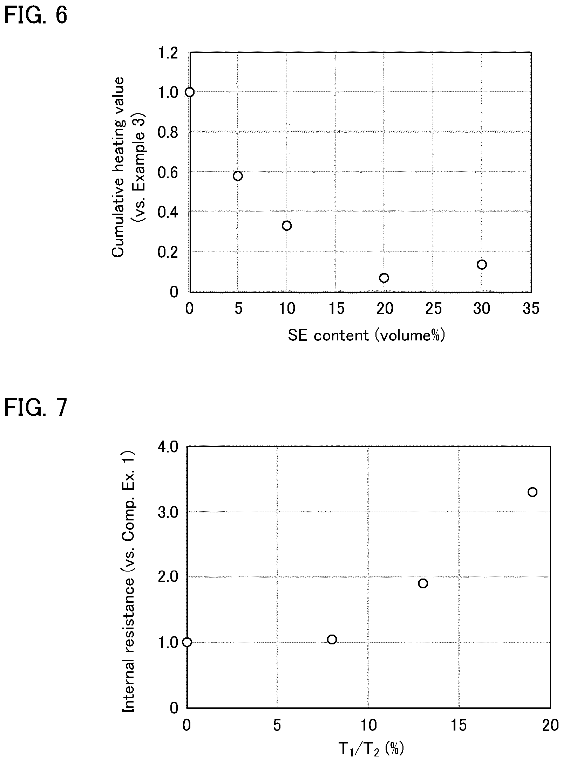

The evaluation cells obtained in Examples 6 to 9 were charge, and a nailing test was carried out. The testing conditions were as described above. The results are shown in FIG. 6 and Table 3. Incidentally, the cumulative heating value is a relative value when the result in Example 3 is regarded as 1.00.

As shown in FIG. 6 and Table 3, compared to Example 3, it was confirmed that the cumulative heating values in Examples 6 to 9 were decreased. The reason therefor is presumed that the shutdown function was exhibited rapidly by a preferable ion conductive path being formed in the coating layer. Also, it was suggested that the cumulative heating value decreasing effect was saturated when the SE content exceeded 20 volume%.

**[Table 3]**

| | T₁/T₂ [%] | SE content [volume%] | Cumulative heating value |
|---|---|---|---|
| Example 3 | 8 | 0 | 1.00 |
| Example 6 | 8 | 5 | 0.58 |
| Example 7 | 8 | 10 | 0.33 |
| Example 8 | 8 | 20 | 0.07 |
| Example 9 | 8 | 30 | 0.14 |

### [Example 10 and Comparative Example 4]

An evaluation cell was obtained in the same manner as in Example 6 except that the proportion of the sulfide solid electrolyte in the coating layer (SE content) and the value of T₁/T₂ were changed to the values described in Table 4.

### <Internal resistance evaluation>

An internal resistance evaluation was carried out for the evaluation cells obtained in Example 10 and Comparative Example 4. The evaluation conditions were as described above. The results are shown in FIG. 7 and Table 4. Incidentally, the internal resistance is a relative value when the result in Comparative Example 1 is regarded as 1.00.

**[Table 4]**

| | T₁/T₂ [%] | SE content [volume%] | Internal resistance |
|---|---|---|---|
| Comp. Ex. 1 | 0 | 0 | 1.00 |
| Example 9 | 8 | 30 | 1.05 |
| Example 10 | 13 | 30 | 1.90 |
| Comp. Ex. 4 | 19 | 30 | 3.30 |

As shown in FIG. 7 and Table 4, it was confirmed that the internal resistances in Examples 9 and 10 were equivalent to Comparative Example 1. Meanwhile, compared to Comparative Example 1, the internal resistances in Comparative Example 4 was increased.

### [Examples 11 to 13]

An evaluation cell was obtained in the same manner as in Example 5 except that the surface roughness of the anode current collector (the surface roughness of the surface where the coating layer was formed) was changed to the value described in Table 5.

### <Nailing test>

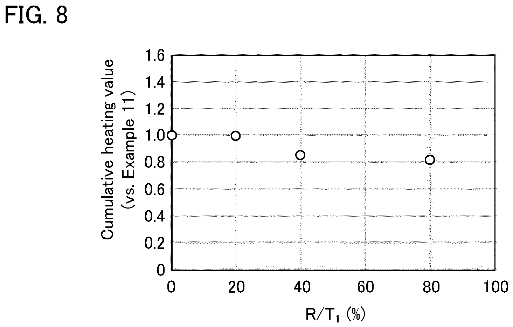

The evaluation cells obtained in Examples 11 to 13 were charge, and a nailing test was carried out. The testing conditions were as described above. The results are shown in FIG. 8 and Table 5. Incidentally, the cumulative heating value is a relative value when the result in Example 11 is regarded as 1.00.

**[Table 5]**

| | T₁ [*µ*m] | T₁/T₂ [%] | Surface roughness of anode current col lector R[*µ* m] | R/T₁ [%] | Cumulative heating value |
|---|---|---|---|---|---|
| Example 11 | 10 | 13 | 0.5 or less | 0 | 1.00 |
| Example 12 | 10 | 13 | 2 | 20 | 0.99 |
| Example 5 | 10 | 13 | 4 | 40 | 0.85 |
| Example 13 | 10 | 13 | 8 | 80 | 0.82 |

As shown in FIG. 8 and Table 5, it was confirmed that the cumulative heating value was decreased, as the value of R/T₁ was larger. Particularly, when R/T₁ was 30% or more, the cumulative heating value was decreased remarkably.

### Reference Signs List

- 1: cathode active material layer
- 2: cathode current collector
- 3: anode active material layer
- 4: anode current collector
- 5: solid electrolyte layer
- 6: coating layer
- 10: all solid state battery

## Claims

1. An all solid state battery comprising an anode active material layer (3), and an anode current collector (4), and
the anode active material layer includes an anode active material whose total volume expansion rate, due to charge, is 14% or more,
the anode current collector includes a coating layer (6) including an oxide active material, on a surface of the anode active material layer side,
a ratio of a thickness of the coating layer to a thickness of the anode active material layer is 3% or more and 13% or less, and
the oxide active material is a lithium titanate or a niobium titanium based oxide.

2. The all solid state battery according to claim 1, **characterized in that** the ratio of a thickness of the coating layer to a thickness of the anode active material layer is 5% or more and 13% or less.

3. The all solid state battery according to any one of claims 1 or 2, **characterized in that** the anode active material is a Si based active material.

4. The all solid state battery according to any one of claims 1 to 3, **characterized in that** a thickness of the coating layer is 10 µm or less.

5. The all solid state battery according to any one of claims 1 to 4, **characterized in that** the coating layer includes no solid electrolyte.

6. The all solid state battery according to any one of claims 1 to 4, **characterized in that** the coating layer includes a solid electrolyte.

7. The all solid state battery according to claim 6, **characterized in that** a ratio of the solid electrolyte in the coating layer is 5 volume% or more and 30 volume% or less.

8. The all solid state battery according to any one of claims 1 to 7, **characterized in that** a ratio of a surface roughness (Rz) of a surface of the anode current collector, on the coating layer side, to a thickness of the coating layer is 30% or more and 80% or less.

## Patentansprüche

1. All-Solid-State-Batterie, umfassend eine Anoden-Aktivmaterialschicht (3) und einen Anoden-Stromkollektor (4), und
wobei die Anoden-Aktivmaterialschicht ein Anoden-Aktivmaterial beinhaltet, dessen Gesamtvolumenausdehnungsrate, aufgrund von Ladung, 14 % oder mehr beträgt,
wobei der Anoden-Stromkollektor eine Beschichtungsschicht (6) einschließlich eines Oxid-Aktivmaterials auf einer Oberfläche der Seite der Anoden-Aktivmaterialschicht beinhaltet,
wobei ein Verhältnis einer Dicke der Beschichtungsschicht zu einer Dicke der Anoden-Aktivmaterialschicht 3 % oder mehr und 13 % oder weniger beträgt, und
wobei das Oxid-Aktivmaterial ein Lithiumtitanat- oder ein Niobtitan-basiertes Oxid ist.

2. All-Solid-State-Batterie nach Anspruch 1, **dadurch gekennzeichnet, dass** das Verhältnis einer Dicke der Beschichtungsschicht zu einer Dicke der Anoden-Aktivmaterialschicht 5 % oder mehr und 13 % oder weniger beträgt.

3. All-Solid-State-Batterie nach einem der Ansprüche 1 oder 2, **dadurch gekennzeichnet, dass** das Anoden-Aktivmaterial ein Si-basiertes Aktivmaterial ist.

4. All-Solid-State-Batterie nach einem der Ansprüche 1 bis 3, **dadurch gekennzeichnet, dass** eine Dicke der Beschichtungsschicht 10 µm oder weniger beträgt.

5. All-Solid-State-Batterie nach einem der Ansprüche 1 bis 4, **dadurch gekennzeichnet, dass** die Beschichtungsschicht keinen Festelektrolyten beinhaltet.

6. All-Solid-State-Batterie nach einem der Ansprüche 1 bis 4, **dadurch gekennzeichnet, dass** die Beschichtungsschicht einen Festelektrolyten beinhaltet.

7. All-Solid-State-Batterie nach Anspruch **6, dadurch gekennzeichnet, dass** ein Verhältnis des Festelektrolyten in der Beschichtungsschicht 5 Volumen-% oder mehr und 30 Volumen-% oder weniger beträgt.

8. All-Solid-State-Batterie nach einem der Ansprüche 1 bis 7, **dadurch gekennzeichnet, dass** ein Verhältnis einer Oberflächenrauigkeit (Rz) einer Oberfläche des Anoden-Stromkollektors auf der Seite der Beschichtungsschicht zu einer Dicke der Beschichtungsschicht 30 % oder mehr und 80 % oder weniger beträgt.

## Revendications

1. Batterie tout solide, comprenant une couche de matériau actif d'anode (3) et un collecteur de courant d'anode (4), et
la couche de matériau actif d'anode comportant un matériau actif d'anode dont le taux de dilatation volumique total, dû à la charge, est supérieur ou égal à 14 %,
le collecteur de courant d'anode comportant une couche de revêtement (6) comportant un matériau actif à base d'oxyde, sur une surface du côté de la couche de matériau actif d'anode,
un rapport entre l'épaisseur de la couche de revêtement et l'épaisseur de la couche de matériau actif d'anode étant supérieur ou égal à 3 % et inférieur ou égal à 13 %, et
le matériau actif à base d'oxyde étant un titanate de lithium ou un oxyde à base de niobium-titane.

2. Batterie tout solide selon la revendication 1, **caractérisée en ce que** le rapport entre l'épaisseur de la couche de revêtement et l'épaisseur de la couche de matériau actif d'anode est supérieur ou égal à 5 % et inférieur ou égal à 13 %.

3. Batterie tout solide selon l'une quelconque des revendications 1 ou 2, **caractérisée en ce que** le matériau actif d'anode est un matériau actif à base de Si.

4. Batterie tout solide selon l'une quelconque des revendications 1 à 3, **caractérisée en ce que** l'épaisseur de la couche de revêtement est inférieure ou égale à 10 µm.

5. Batterie tout solide selon l'une quelconque des revendications 1 à 4, **caractérisée en ce que** la couche de revêtement ne contient pas d'électrolyte solide.

6. Batterie tout solide selon l'une quelconque des revendications 1 à 4, **caractérisée en ce que** la couche de revêtement contient un électrolyte solide.

7. Batterie tout solide selon la revendication 6, **caractérisée en ce qu'**une proportion de l'électrolyte solide dans la couche de revêtement est supérieure ou égale à 5 % en volume et inférieure ou égale à 30 % en volume.

8. Batterie tout solide selon l'une quelconque des revendications 1 à 7, **caractérisée en ce qu'**un rapport entre la rugosité de surface (Rz) d'une surface du collecteur de courant d'anode, du côté de la couche de revêtement, et l'épaisseur de la couche de revêtement est supérieur ou égal à 30 % et inférieur ou égal à 80 %.
